# EUROPÄISCHE PATENTANMELDUNG

(11) **EP 0 959 452 A2**
(43) Veröffentlichungstag der Anmeldung: **24.11.1999**
(21) Anmeldenummer: 99109052.3
(22) Anmeldetag: 07.05.1999
(51) Int. Cl.: G09G 3/36

(54) **Verfahren zur Darstellung veränderlicher Informationen**

(30) Priorität: 23.05.1998 DE 19823191; 07.04.1999 DE 19915622
(71) Anmelder: Mannesmann VDO Aktiengesellschaft, 60388 Frankfurt am Main (DE)
(72) Erfinder: Brandt, Peter, 64832 Babenhausen (DE)
(74) Vertreter: Klein, Thomas, Dipl.-Ing.

(57) **Zusammenfassung**

Die Erfindung betrifft ein Verfahren zur Darstellung veränderlicher Informationen auf einer Anzeigevorrichtung, insbesondere in einem Kraftfahrzeug, mit einem ersten eine Flüssigkristallzelle aufweisenden Dot-Matrix-Display und mit einem zu dem ersten Display optisch in Reihe angeordneten zweiten eine Flüssigkristallzelle aufweisenden Display, wobei die Flüssigkristallzelle des ersten Displays in einem Multiplex-Verfahren angesteuert wird.

Um eine sichere Anzeige zumindest eines Teilumfangs der Informationen auch bei niedrigen Temperaturen zu gewährleisten, schlägt die Erfindung vor, daß der Teilumfang der Informationen bei einer Umgebungstemperatur oberhalb einer Grenztemperatur auf dem ersten Display mit der im Multiplex-Verfahren angesteuerten Flüssigkristallzelle und unterhalb der Grenztemperatur auf dem zweiten, zum ersten Display optisch in Reihe angeordneten Display dargestellt wird und daß die von der Summe aus Einschaltzeit und Ausschaltzeit gebildete Schaltzeit der Flüssigkristallzelle des zweiten Displays kürzer ist als die Schaltzeit der Flüssigkristallzelle des ersten Displays.

## Beschreibung

Die Erfindung betrifft ein Verfahren zur Darstellung veränderlicher Informationen auf einer Anzeigevorrichtung, insbesondere in einem Kraftfahrzeug, mit einem ersten eine Flüssigkristallzelle aufweisenden Dot-Matrix-Display und mit einem zu dem ersten Display optisch in Reihe angeordneten zweiten eine Flüssigkristallzelle aufweisenden Display, wobei die Flüssigkristallzelle des ersten Displays in einem Multiplex-Verfahren angesteuert wird.

Derartige Verfahren, die der Informationsdarstellung auf Flüssigkristall-Displays dienen, sind bekannt. Dabei werden zwei gleichartige optisch in Reihe angeordnete Flüssigkristall-Displays verwendet, um durch die Überlagerung von Darstellungen der beiden Anzeigen eine hohe Auflösung des Bildes und eine hohe Informationsdichte der Anzeige zu erzielen.

Mit der zur Ansteuerung in einem Multiplex-Verfahren erforderlichen Multiplex-Rate, die mit der Anzahl der vorhandenen Bildzeilen und -spalten steigt, ändert sich nicht nur die erforderliche Ansteuerspannung, sondern auch die sich aus der Summe aus Einschaltzeit und Ausschaltzeit ergebende Schaltzeit des jeweiligen Displays. Die Einschaltzeit umfaßt dabei den Zeitraum, der vom ersten Ansteuerimpuls eines angesteuerten Anzeigesegments bis zum Erreichen eines maximalen Kontrastes zwischen angesteuertem Zeichen und seinem Umfeld verstreicht, die Ausschaltzeit hingegen umfaßt den Zeitraum, der vom Wegfall des Ansteuerimpulses bis zum Erreichen eines Minimalkontrastes zwischen Zeichen und Umfeld vergeht. Die Schaltzeit des Displays kann abhängig sein von der verwendeten Flüssigkristall-Substanz, der Ansteuerspannung und dem Ansteuerverfahren. Darüber hinaus besteht eine starke Abhängigkeit von der Umgebungstemperatur in der Weise, daß bei sinkenden Umgebungstemperaturen die Schaltzeit des Displays sehr groß wird. Daher ist es nicht möglich, auf einem Display mit einer großen Anzahl von Bildpunkten Informationen bei niedrigen Umgebungstemperaturen sicher darzustellen. Dies erweist sich insbesondere dann als nicht akzeptabel, wenn mit dem Display sicherheitsrelevante Informationen dargestellt werden.

Um diesem Mißstand abzuhelfen, ist es daher bekannt, einen der Beleuchtung einer Flüssigkristallzelle in einer Flüssigkristallanzeige dienenden Lichtkasten mit einem Heizdraht zu versehen. Mittels des Heizdrahts wird die Flüssigkristallzelle erwärmt und auf einem Temperaturniveau gehalten, das es auch bei niedrigen Umgebungstemperaturen ermöglicht, die Flüssigkristallanzeige mit den erforderlichen kurzen Schaltzeiten betreiben zu können. Aufgrund des relativ großen Abstands zwischen Heizdraht und Flüssigkristallzelle ist eine hohe Energiezufuhr und eine starke Aufheizung des Heizdrahts notwendig, um die erforderliche Erwärmung der Flüssigkristallzelle erzeugen zu können. Darüber hinaus erwärmt der Heizdraht aufgrund seiner Anordnung in dem Lichtkasten und seiner erforderlichen hohen Wärmeabstrahlung in unerwünschter Weise die gesamte Anzeigeeinheit.

Der Erfindung liegt die Aufgabe zugrunde, ein Verfahren zur Darstellung veränderlicher Informationen der eingangs genannten Art vorzuschlagen, womit eine Flüssigkristallanzeigevorrichtung sowohl im Normalbetrieb einen großen Informationsumfang darstellen kann, als auch bei einem Betrieb bei niedrigen Umgebungstemperaturen einen geringeren Teilumfang der Informationen noch gut ablesbar und sicher darstellen kann. Gleichzeitig soll eine unerwünschte Erwärmung der Anzeigevorrichtung vermieden werden.

Diese Aufgabe wird erfindungsgemäß zum einen dadurch gelöst, daß ein Teilumfang der Informationen bei einer Umgebungstemperatur oberhalb einer Grenztemperatur auf dem ersten Display mit der im Multiplex-Verfahren angesteuerten Flüssigkristallzelle und unterhalb der Grenztemperatur auf dem zweiten, zum ersten Display optisch in Reihe angeordneten Display dargestellt wird und daß die von der Summe aus Einschaltzeit und Ausschaltzeit gebildete Schaltzeit der Flüssigkristallzelle des zweiten Displays kürzer ist als die Schaltzeit der Flüssigkristallzelle des ersten Displays.

Vorgenannte Aufgabe wird erfindungsgemäß auch dadurch gelöst, daß ein Teilumfang der Informationen bei einer Umgebungstemperatur oberhalb einer Grenztemperatur auf dem ersten Display mit der im Multiplex-Verfahren angesteuerten Flüssigkristallzelle und gleichzeitig auf dem zweiten, zum ersten Display optisch in Reihe angeordneten Display dargestellt wird, daß der Teilumfang der Informationen bei einer Umgebungstemperatur unterhalb der Grenztemperatur ausschließlich auf dem zweiten Display dargestellt wird und daß die von der Summe aus Einschaltzeit und Ausschaltzeit gebildete Schaltzeit der Flüssigkristallzelle des zweiten Displays kürzer ist als die Schaltzeit der Flüssigkristallzelle des ersten Displays.

Mit Hilfe dieser beiden Verfahren ist es nicht erforderlich, separate Heizvorrichtungen in der Anzeigevorrichtung vorzusehen. Eine unerwünschte Aufheizung von nicht zu erwärmenden Teilen der Anzeigevorrichtung ist somit ausgeschlossen und eine zusätzliche Bereitstellung elektrischer Energie für die Heizung nicht erforderlich. Neben der Darstellung eines Teilumfangs der Informationen, bei denen es sich vorzugsweise um sicherheitsrelevante Informationen, wie z. B. die Anzeige einer Fahrgeschwindigkeit in einem Kraftfahrzeug, handelt, ist bei hinreichend hoher, d. h. bei über der Grenztemperatur liegender, Umgebungstemperatur eine große Anzahl weiterer Informationen anzeigbar. Diese weiteren Informationen können in einem Kraftfahrzeug bspw. Serviceintervallanzeigen, Funktionsmeldungen elektrischer Einrichtungen und allgemein informelle Angaben umfassen. Bei niedrigen Temperaturen, die unterhalb der Grenztemperatur liegen, ist mit den erfindungsgemäßen Verfahren zumindest eine Darstellung von Grundinformationen gewährleistet. Die Grenztemperatur ist dabei in etwa so gewählt, daß bei darunterliegenden Temperaturen eine leichte und gute Ablesbarkeit des ersten Displays mit der längeren Schaltzeit nicht mehr gewährleistet wäre.

Entsprechend dem erstgenannten Verfahren wird dabei der Teilumfang der Informationen oberhalb der Grenztemperatur auf dem Display mit längerer Schaltzeit, aber größerer Informationsdichte, dargestellt, wohingegen bei einer Temperatur unterhalb der Grenztemperatur die Darstellung auf dem anderen, eine kürzere Schaltzeit aufweisenden Display erfolgt, wobei in Kauf genommen wird, daß hierbei der insgesamt darstellbare Informationsumfang geringer ist.

Demgegenüber wird entsprechend dem zweitgenannten Verfahren bei einer Umgebungstemperatur oberhalb der Grenztemperatur der Teilumfang der Informationen auf beiden Displays dargestellt, wobei das Display mit den größeren Schaltzeiten und dem höheren darstellbaren Informationsumfang beim Überschreiten der Grenztemperatur in Richtung sinkender Temperaturen abgeschaltet wird. Auf diese Weise ist eine besonders einheitliche Darstellung der Informationen auf den beiden Displays erreicht.

Gemäß einer vorteilhaften Weiterbildung der Erfindung umfaßt die Grenztemperatur einen Temperaturbereich mit einer unteren und mit einer oberen Grenze, wodurch die Ablesbarkeit der Anzeigevorrichtung erhöhend verhindert wird, daß bei um die Grenztemperatur schwankender Umgebungstemperatur ständig eine Umschaltung zwischen den beiden Displays erfolgt. Bei Verwendung üblicher Flüssigkristall-Substanzen und insbesondere beim Einsatz der Anzeigevorrichtung in einem Kraftfahrzeug erweist es sich dabei als günstig, wenn die untere Grenze des Temperaturbereichs in etwa minus 10 °C und die obere Grenze des Temperaturbereichs in etwa 0 °C beträgt.

Eine besonders gute Ablesbarkeit der Anzeigevorrichtung ist zu erreichen, wenn bei einer Umgebungstemperatur oberhalb der unteren Grenze des Temperaturbereichs und unterhalb der oberen Grenze des Temperaturbereichs der Teilumfang der Informationen gleichzeitig auf dem ersten und auf dem zweiten Display dargestellt wird.

Die Darstellung auf dem zu dem ersten Display optisch in Reihe angeordneten zweiten Display ist die Ablesbarkeit vereinfachend vorteilhaft an das erste Display anpaßbar, wenn das zweite Display ein Dot-Matrix-Display ist. Auf diese Weise ist außerdem eine Ansteuerung dieses Displays zur freizügigen Informationsdarstellung ermöglicht.

Man könnte sich vorstellen, das zweite Display in einem Parallelansteuerungs-Verfahren anzusteuern. Die Anzahl der Ansteuerleitungen des zweiten Displays kann aber verringert und dennoch eine größere Anzahl von Informationen dargestellt werden, wenn gemäß einer vorteilhaften Weiterbildung der Erfindung die Flüssigkristallzelle des zweiten Displays in einem Multiplex-Verfahren angesteuert wird. Dabei wird die Flüssigkristallzelle des zweiten Displays vorzugsweise mit einer geringen, eine kurze Schaltzeit gewährleistenden Multiplex-Rate von höchstens 1 : 4 angesteuert. Es ist aber auch denkbar, eine noch niedrigere Multiplex-Rate von beispielsweise 1 : 2 zu verwenden.

Der mit dem ersten Display darstellbare Informationsumfang ist bei einer geringen Anzahl von Ansteuerleitungen vorteilhaft hoch, wenn die Flüssigkristallzelle des ersten Displays mit einer Multiplex-Rate von 1 : 64 angesteuert wird. Somit ist sichergestellt, daß auf diesem Display ein hoher Informationsumfang und eine breite Informationsvielfalt darstellbar ist.

Gemäß einer anderen vorteilhaften Weiterbildung der Erfindung ist der Kontrast der Anzeige besonders hoch, wenn die Flüssigkristallzelle des ersten Displays mit einer Ansteuerspannung von in etwa 12 V angesteuert wird.

Ebenfalls einer Erhöhung des Anzeigekontrastes dient es, wenn die Flüssigkristallzelle des zweiten Displays mit einer Ansteuerspannung von vorzugsweise in etwa 5 V angesteuert wird.

Insbesondere bei Verwendung der Anzeigevorrichtung in einem Kraftfahrzeug und bei Einsatz herkömmlicher Flüssigkristall-Substanzen unter Verwendung üblicher Ansteuerspannungen ist es von besonderem Vorteil, wenn die Grenztemperatur in etwa 0 °C beträgt.

Gemäß einer anderen vorteilhaften Weiterbildung der Erfindung ist die Flüssigkristallzelle des ersten Displays und/oder die Flüssigkristallzelle des zweiten Displays eine STN-Zelle. Mit STN-Zellen wird ein besonders hoher Kontrast der Anzeige erzielt, und es sind außerdem besonders niedrige Schaltzeiten zu erreichen. Dies ist insbesondere beim Einsatz der Anzeigevorrichtung in einem Kraftfahrzeug von Vorteil, da hier sich schnell ändernde Anzeigen mit hoher Sicherheit ablesbar sein müssen. Durch die Anordnung von zwei Flüssigkristallzellen in Reihe wird bei Verwendung zweier gleichartiger Zellen eine Farbkompensation erreicht, die insbesondere bei STN-Zellen zur besseren Ablesbarkeit erforderlich sein kann. STN-Zellen sind darüber hinaus auch aus seitlicher Blickrichtung noch einwandfrei ablesbar.

Man könnte sich vorstellen, daß ein Betrachter der Anzeigevorrichtung bei sinkender Umgebungstemperatur manuell eine Umschaltung der Displays bzw. eine Abschaltung des ersten, eine längere Schaltzeit aufweisenden Displays vornimmt. Das erfindungsgemäße Verfahren ist jedoch dann besonders komfortabel, wenn die Umgebungstemperatur mittels eines Temperatursensors erfaßt wird, der Temperatursensor ein der Umgebungstemperatur entsprechendes elektrisches Signal an eine elektrische Steuereinrichtung sendet und die Steuereinrichtung entsprechend dem Signal des Temperatursensors die Flüssigkristallzelle des ersten Displays und/oder die Flüssigkristallzelle des zweiten Displays zur Darstellung des Teilumfangs der Informationen ansteuert. Auf diese Weise wird automatisch die geeignete Ansteuerung der Anzeigevorrichtung gewählt, wodurch weder unnötig auf Informationen verzichtet werden muß noch eine sichere Wahrnehmbarkeit wichtiger Anzeigen in Frage gestellt ist.

Ein besonders hoher Kontrast und kurze Schaltzeiten lassen sich mit der Anzeigevorrichtung vorteilhaft erzielen, wenn die Flüssigkristallzelle des ersten Displays und/oder die Flüssigkristallzelle des zweiten Displays als Flüssigkristall-Substanz den Stoff MERCK ZLI-4431 aufweist.

Eine maximale bauliche Integration der Elemente der Anzeigevorrichtung für das erfindungsgemäße Verfahren läßt sich gemäß einer anderen vorteilhaften Weiterbildung der Erfindung dadurch erreichen, daß das erste, in einem Multiplex-Verfahren ansteuerbare Display und das zweite Display ein mindestens zwei elektrisch voneinander getrennte und unabhängig ansteuerbare Elektrodenlagen auf jeweils einem Substrat aufweisendes Multilayer-Flüssigkristall-Display bilden. Obwohl mit einer solchen Bauform funktional weiterhin zwei optisch in Reihe angeordnete Displays vorhanden sind, ist hierfür lediglich eine einzelne Flüssigkristallzelle mit einem vorderen und einem hinteren, jeweils Elektroden tragenden Substrat erforderlich, wobei zwischen den Substraten eine Flüssigkristallsubstanz eingeschlossen ist. Besonders günstig und die Bauform vereinfachend ist es dabei, wenn gemäß einer anderen vorteilhaften Weiterbildung der Erfindung das erste Display jeweils eine erste der Elektrodenlagen und das zweite Display jeweils die zweite Elektrodenlage der Substrate aufweist.

Die Erfindung wird im folgenden anhand von in der beigefügten Zeichnung dargestellten Ausführungsbeispielen näher erläutert. Dabei zeigen
- Figuren 1a bis 1c: zwei Flüssigkristall-Displays einer Anzeigevorrichtung in verschiedenen Ansteuerzuständen in perspektivischer Ansicht,
- Figur 2: eine Anzeigevorrichtung mit zwei Flüssigkristall-Displays in einer Schnittdarstellung und
- Figur 3: ein Multilayer-Flüssigkristall-Display einer weiteren Anzeigevorrichtung in geschnittener Ansicht.

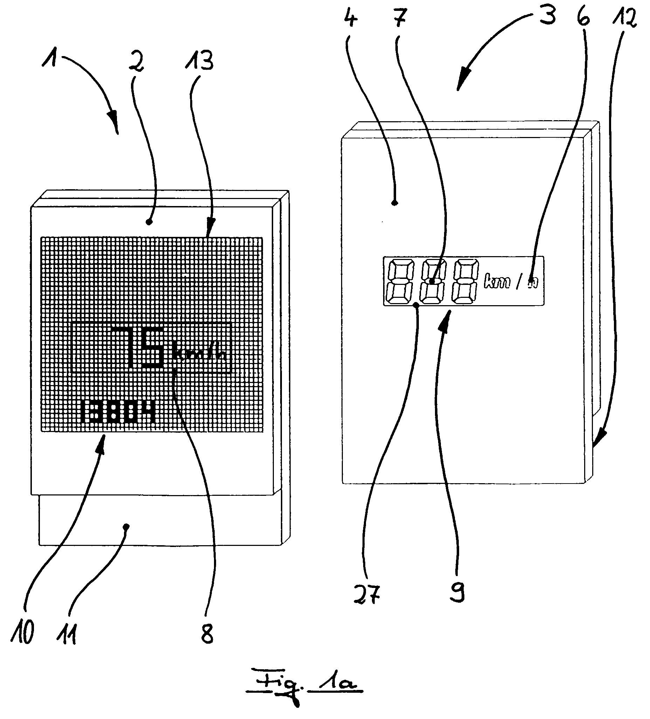

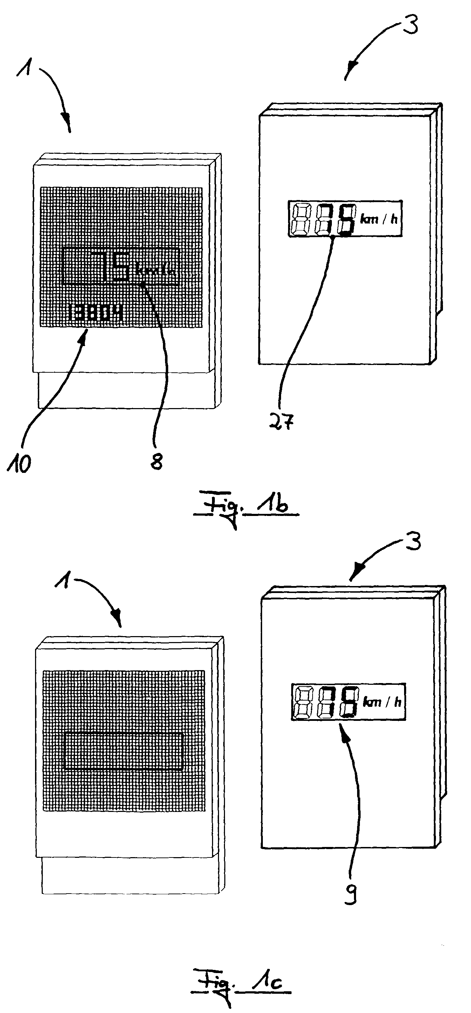

Figur 1a zeigt zwei optisch in Reihe angeordnete Flüssigkristall-Displays 1, 3 einer hier nicht weiter dargestellten Anzeigevorrichtung in einer Instrumententafel eines Kraftfahrzeugs in perspektivischer Darstellung. Aus Gründen der Übersichtlichkeit sind die Displays 1, 3 nicht unmittelbar benachbart, sondern mit einem Abstand zueinander dargestellt. Das Flüssigkristall-Display 1 ist ein Dot-Matrix-Display mit einer Flüssigkristallzelle 2, die einen Kontaktbereich 11 zur Verbindung mit einer Ansteuereinrichtung und einen von einer Dot-Matrix gebildeten Anzeigebereich 13 aufweist. In dem Anzeigebereich 13 sind unterschiedliche Informationen darstellbar, wobei hier eine Wegstreckenanzeige 10 und in einem Teilanzeigebereich 8 eine Geschwindigkeitsanzeige 9 dargestellt sind.

Das zweite Display 3, das eine kürzere Schaltzeit aufweist als das Display 1, besitzt eine Flüssigkristallzelle 4 und einen Kontaktbereich 12 zur Verbindung mit einer Ansteuereinrichtung. Ein Anzeigebereich 27 der Flüssigkristallzelle 4 ist so angeordnet, daß er mit dem Teilanzeigebereich 8 des Displays 1 zur Deckung bringbar ist. In dem Anzeigebereich 27 ist entsprechend dem Teilanzeigebereich 8 des ersten Displays 1 eine Geschwindigkeitsanzeige 9 darstellbar. In dem Anzeigebereich 27 weist die Flüssigkristallzelle 4 Segmente 7 von Sieben-Segment-Anordnungen zur Darstellung von Ziffern auf sowie Buchstaben darstellende Segmente 6. In der Darstellung der Figur 1a ist die Anzeigevorrichtung so angesteuert, daß auf dem zweiten Display 3 keine Anzeige stattfindet, wohingegen auf dem Display 1 in dem Teilanzeigebereich 8 eine Fahrgeschwindigkeit von 75 km/h und auf dem Restfeld des Anzeigebereichs 13 eine zurückgelegte Wegstrecke von 13804 (km) angezeigt wird. Eine entsprechende Ansteuerung der Displays 1, 3 liegt bei normalen Umgebungstemperaturen von z. B. 20 °C vor.

Bei einer Ansteuerung der Displays 1, 3, wie sie in Figur 1b gezeigt ist, wird sowohl auf dem Dot-Matrix-Display 1 als auch auf dem Display 3 die Fahrgeschwindigkeit von 75 km/h in dem Teilanzeigebereich 8 bzw. dem Anzeigebereich 27 dargestellt. Zusätzlich ist auf dem Display 1 die Wegstreckenanzeige 10 abgebildet. Eine Figur 1b entsprechende Ansteuerung der Anzeigevorrichtung erfolgt in einem Übergangs- oder Grenztemperaturbereich von z. B. 0 °C bis minus 10 °C.

Sinken die Temperaturen weiter ab, d. h. liegt eine Umgebungstemperatur vor, die niedriger ist als die untere Grenztemperatur von minus 10 °C, und ist auf dem Dot-Matrix-Display 1 aufgrund dessen hoher Schaltzeit eine sichere Darstellung nicht mehr möglich, so wird entsprechend Figur 1c lediglich noch das eine kurze Schaltzeit aufweisende zweite Display 3 angesteuert. Die sicherheitsrelevante Teilinformation Geschwindigkeitsanzeige 9 wird jetzt auf dem Display 3 noch sicher und gut ablesbar angezeigt.

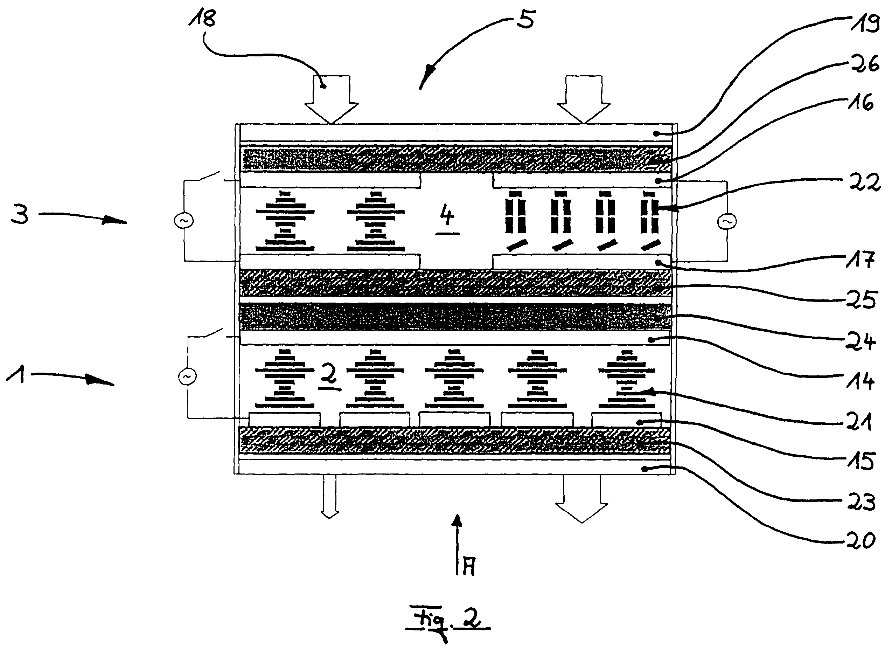

Einen Ausschnitt einer weiteren Anzeigevorrichtung 5 für ein Kraftfahrzeug zeigt Figur 2 in geschnittener Darstellung, wobei der Vorrichtung aus Figuren 1a bis 1c entsprechende Bauteile mit gleichen Bezugszeichen versehen sind.

Entgegen einer Betrachtungsrichtung A der Anzeigevorrichtung 5 sind ein Dot-Matrix-Display 1 mit einer Flüssigkristallzelle 2 und ein Display 3 mit einer Flüssigkristallzelle 4 optisch in Reihe angeordnet. Die Displays 1, 3 werden von der Rückseite her durch eine mit Hilfe von Pfeilen symbolisierte Beleuchtung 18 beleuchtet. Sowohl bei der Flüssigkristallzelle 2 als auch bei der Flüssigkristallzelle 4 handelt es sich um eine STN-Zelle, wodurch eine Kompensation störender Farbeffekte der Anzeige erreicht wird. Eine solche Anordnung von STN-Zellen optisch in Reihe wird auch als DSTN-Zelle bezeichnet. Das Display 1 ist an seiner Vorder- und Rückseite jeweils mit einer von jeweils einer Glasplatte gebildeten vorderen Wand 23 und hinteren Wand 24 begrenzt, wobei auf der hinteren Wand 24 streifenförmige Rückelektroden 14 und auf der vorderen Wand 23 streifenförmige Frontelektroden 15 angebracht sind. Die Rückelektroden 14 und die Frontelektroden 15 sind gegeneinander um 90 °, eine Dot-Matrix bildend verdreht. Durch sukzessives Ansteuern der Rückelektroden 14 (Zeilenelektroden) und der Frontelektroden 15 (Spaltenelektroden) wird dazwischenliegende Flüssigkristall-Substanz 21 entsprechend der Ansteuerung ausgerichtet. In der Darstellung der Figur 2 sind die Elektroden 14, 15 nicht angesteuert.

Das zweite Display 3 ist jeweils mit einer von jeweils einer Glasplatte gebildeten vorderen Wand 25 und hinteren Wand 26 begrenzt. Auf der vorderen Wand 25 und der hinteren Wand 26 sind jeweils einander zugeordnete, Segmente bildende Frontelektroden 17 und Rückelektroden 16 angebracht. Bei Anlegen einer Ansteuerspannung an die Elektroden 16, 17, wie im rechten Teil des Displays 3 dargestellt, wird zwischen den Elektroden angeordnete Flüssigkristall-Substanz 22 derart ausgerichtet, daß den Elektroden entsprechende Zeichen dargestellt werden. Vor der vorderen Wand 23 des ersten Displays 1 und hinter der hinteren Wand 26 des Displays 3 sind jeweils Polarisatoren 20, 19 angeordnet.

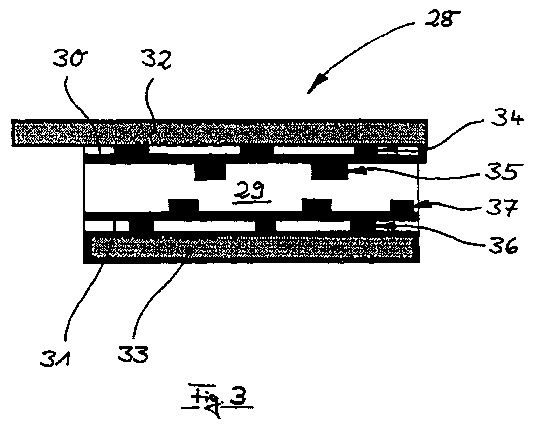

Anstelle der in den vorigen Figuren dargestellten optisch in Reihe angeordneten zwei einzelnen Displays kann, wie in Figur 3 dargestellt, ein einzelnes Multilayer-Flüssigkristall-Display 28 für die Anzeigevorrichtung verwendet werden. Das Display 28 weist auf einem vorderen Substrat 32 aufgebrachte und durch eine Isolationsschicht 30 voneinander getrennte Elektrodenlagen 34, 35 auf, die mit auf ein hinteres Substrat 33 aufgebrachten und durch eine Isolationsschicht 31 elektrisch voneinander getrennten Elektrodenlagen 36, 37 korrespondieren. Zwischen dem vorderen Substrat 32 und dem hinteren Substrat 33 ist eine Flüssigkristall-Substanz in einem Zwischenraum 29 einschlossen, wobei die Flüssigkristall-Substanz den Zwischenraum 29 vollständig ausfüllt. Zwischen jeweils korrespondierenden ersten Elektrodenlagen 34, 36 und zweiten Elektrodenlagen 35, 37 befindliche Flüssigkristall-Substanz ist durch Anlegen von elektrischer Spannung an ausgewählte Elektroden ansteuerbar.

## Patentansprüche

1. Verfahren zur Darstellung veränderlicher Informationen auf einer Anzeigevorrichtung, insbesondere in einem Kraftfahrzeug, mit einem ersten eine Flüssigkristallzelle aufweisenden Dot-Matrix-Display und mit einem zu dem ersten Display optisch in Reihe angeordneten zweiten eine Flüssigkristallzelle aufweisenden Display, wobei die Flüssigkristallzelle des ersten Displays in einem Multiplex-Verfahren angesteuert wird, **dadurch gekennzeichnet, daß** ein Teilumfang (9) der Informationen bei einer Umgebungstemperatur oberhalb einer Grenztemperatur auf dem ersten Display (1) mit der im Multiplex-Verfahren angesteuerten Flüssigkristallzelle (2) und unterhalb der Grenztemperatur auf dem zweiten, zum ersten Display (1) optisch in Reihe angeordneten Display (3) dargestellt wird und daß die von der Summe aus Einschaltzeit und Ausschaltzeit gebildete Schaltzeit der Flüssigkristallzelle (4) des zweiten Displays (3) kürzer ist als die Schaltzeit der Flüssigkristallzelle (2) des ersten Displays (1).

2. Verfahren zur Darstellung veränderlicher Informationen nach Anspruch 1, **dadurch gekennzeichnet, daß** die Grenztemperatur einen Temperaturbereich mit einer unteren und mit einer oberen Grenze umfaßt.

3. Verfahren zur Darstellung veränderlicher Informationen nach Anspruch 2, **dadurch gekennzeichnet, daß** die untere Grenze des Temperaturbereichs in etwa minus 10 °C und die obere Grenze des Temperaturbereichs in etwa 0 °C beträgt.

4. Verfahren zur Darstellung veränderlicher Informationen nach Anspruch 2 oder 3, **dadurch gekennzeichnet, daß** bei einer Umgebungstemperatur oberhalb der unteren Grenze des Temperaturbereichs und unterhalb der oberen Grenze des Temperaturbereichs der Teilumfang (9) der Informationen gleichzeitig auf dem ersten (1) und auf dem zweiten (3) Display dargestellt wird.

5. Verfahren zur Darstellung veränderlicher Informationen nach dem Oberbegriff des Anspruchs 1, **dadurch gekennzeichnet, daß** ein Teilumfang (9) der Informationen bei einer Umgebungstemperatur oberhalb einer Grenztemperatur auf dem ersten Display (1) mit der im Multiplex-Verfahren angesteuerten Flüssigkristallzelle (2) und gleichzeitig auf dem zweiten, zum ersten Display (1) optisch in Reihe angeordneten Display (3) dargestellt wird, daß der Teilumfang (9) der Informationen bei einer Umgebungstemperatur unterhalb der Grenztemperatur ausschließlich auf dem zweiten Display (3) dargestellt wird und daß die von der Summe aus Einschaltzeit und Ausschaltzeit gebildete Schaltzeit der Flüssigkristallzelle (4) des zweiten Displays (3) kürzer ist als die Schaltzeit der Flüssigkristallzelle (2) des ersten Displays (1).

6. Verfahren zur Darstellung veränderlicher Informationen nach einem der vorhergehenden Ansprüche, **dadurch gekennzeichnet, daß** das zweite Display (3) ein Dot-Matrix-Display ist.

7. Verfahren zur Darstellung veränderlicher Informationen nach einem der vorhergehenden Ansprüche, **dadurch gekennzeichnet, daß** die Flüssigkristallzelle (4) des zweiten Displays (3) in einem Multiplex-Verfahren angesteuert wird.

8. Verfahren zur Darstellung veränderlicher Informationen nach Anspruch 7, **dadurch gekennzeichnet, daß** die Flüssigkristallzelle (4) des zweiten Displays (3) mit einer Multiplex-Rate von höchstens 1 : 4 angesteuert wird.

9. Verfahren zur Darstellung veränderlicher Informationen nach einem der vorhergehenden Ansprüche, **dadurch gekennzeichnet, daß** die Flüssigkristallzelle (2) des ersten Displays (1) mit einer Multiplex-Rate von 1 : 64 angesteuert wird.

10. Verfahren zur Darstellung veränderlicher Informationen nach einem der vorhergehenden Ansprüche, **dadurch gekennzeichnet, daß** die Flüssigkristallzelle (2) des ersten Displays (1) mit einer Ansteuerspannung von in etwa 12 V angesteuert wird.

11. Verfahren zur Darstellung veränderlicher Informationen nach einem der vorhergehenden Ansprüche, **dadurch gekennzeichnet, daß** die Flüssigkristallzelle (4) des zweiten Displays (3) mit einer Ansteuerspannung von in etwa 5 V angesteuert wird.

12. Verfahren zur Darstellung veränderlicher Informationen nach einem der vorhergehenden Ansprüche, **dadurch gekennzeichnet, daß** die Grenztemperatur in etwa 0 °C beträgt.

13. Verfahren zur Darstellung veränderlicher Informationen nach einem der vorhergehenden Ansprüche, **dadurch gekennzeichnet, daß** die Flüssigkristallzelle (2) des ersten Displays (1) und/oder die Flüssigkristallzelle (4) des zweiten Displays (3) eine STN-Zelle ist.

14. Verfahren zur Darstellung veränderlicher Informationen nach einem der vorhergehenden Ansprüche, **dadurch gekennzeichnet, daß** die Umgebungstemperatur mittels eines Temperatursensors erfaßt wird, daß der Temperatursensor ein der Umgebungstemperatur entsprechendes elektrisches Signal an eine elektrische Steuereinrichtung sendet und daß die Steuereinrichtung entsprechend dem Signal des Temperatursensors die Flüssigkristallzelle (2) des ersten Displays (1) und/oder die Flüssigkristallzelle (4) des zweiten Displays (3) zur Darstellung des Teilumfangs (9) der Informationen ansteuert.

15. Verfahren zur Darstellung veränderlicher Informationen nach einem der vorhergehenden Ansprüche, **dadurch gekennzeichnet, daß** die Flüssigkristallzelle (2) des ersten Displays (1) und/oder die Flüssigkristallzelle (4) des zweiten Displays (3) als Flüssigkristall-Substanz den Stoff MERCK ZLI-4431 aufweist.

16. Verfahren zur Darstellung veränderlicher Informationen nach einem der vorhergehenden Ansprüche, **dadurch gekennzeichnet, daß** das erste, in einem Multiplex-Verfahren ansteuerbare Display und das zweite Display ein mindestens zwei elektrisch voneinander getrennte (Isolationsschicht 30, 31) und unabhängig ansteuerbare Elektrodenlagen (34, 35; 36, 37) auf jeweils einem Substrat (32; 33) aufweisendes Multilayer-Flüssigkristall-Display (28) bilden.

17. Verfahren zur Darstellung veränderlicher Informationen nach Anspruch 16, **dadurch gekennzeichnet, daß** das erste Display jeweils eine erste der Elektrodenlagen (34; 36) und das zweite Display jeweils die zweite Elektrodenlage (35; 37) der Substrate (32; 33) aufweist.
